# EUROPEAN PATENT APPLICATION

(11) **EP 2 006 067 A1**
(43) Date of publication of application: **24.12.2008**
(21) Application number: 07360029.8
(22) Date of filing: 22.06.2007
(51) Int. Cl.: B29C 45/14, B29C 45/16, A44C 11/00, A47H 23/05, A47H 23/10, B44C 5/00

(54) **Bead string**

(71) Applicant: Ni Hau Industrial Co. Ltd., Lane 318, Sec. 2, Anhe Road Tainan City (TW)
(72) Inventor: Shang, Yu Su, Tainan City (TW)
(74) Representative: Metz, Paul

(57) **Abstract**

A bead string (1) includes a thread element (2) and multiple beads (3) firmly attached to the thread element (2); each bead (3) containing one or a plurality of inner layer (31) and one or a plurality of first outer layer (32); both of the inner layer (31) and the first outer layer (32) of the bead (3) being molded by respectively injecting two different types of plastic material into a first cavity and a second cavity; one or a plurality of thread element (2) passing through the first cavity; the second cavity accommodating the thread element (2) and the inner layer (31) of bead (3); and the first outer layer (32) tightly covering up entire portion or a certain portion of the inner layer (31) to correct defectives of a finished product found with the prior art while significantly simplifying manufacturing process and saving time and cost.

## Description

### BACKGROUND OF THE INVENTION

### 1. Field of the Invention

The present invention is related to a bead string, and more particularly, to a thread element covered with multiple beads with each molded by injecting plastic material into different mold cavities to deliver clearly defined color gradations and versatile changes in color and style of beads firmly fastened to the thread element.

### 2. Description of the Prior Art

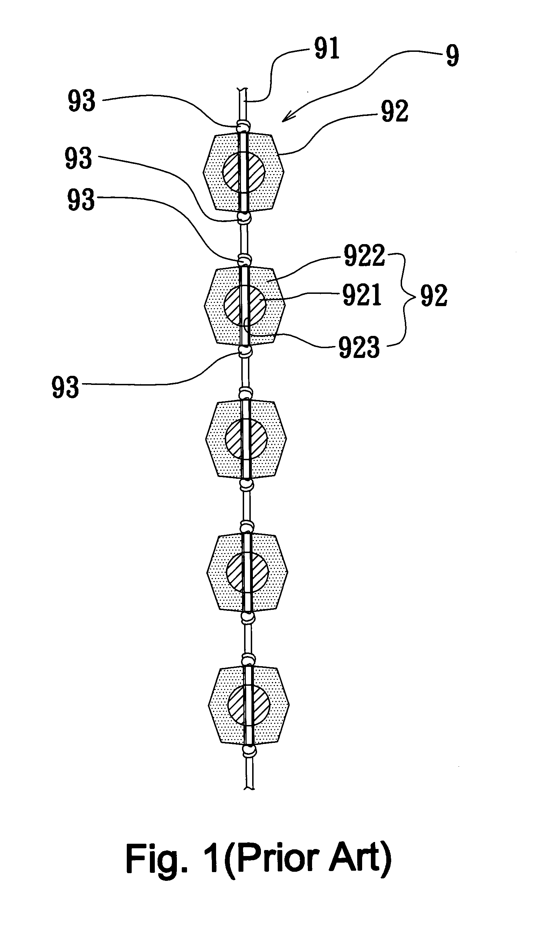

Referring to Fig. 1 of the accompanying drawing for a configuration of a bead string of the prior art, a bead string (9) is comprised of a thread element (91) and multiple beads (92). Generally the thread element (91) is made of cotton and the bead (92) is plastic material injection molded. In the injection molding process, plastic materials of different colors or transparencies are injected by layer to form the bead (92) in multiple layers of plastic material. As illustrated, the bead (92) is comprised of an inner layer (921) and an outer layer (922); a hole (923) is machined through the bead (92); the thread element (91) passes through the through hole (923) of the bead (92) by manual while tying up a fast knot (3) respectively in front of and behind the bead (92); and finally multiple beads (92) are spaced at fixed intervals and attached to the thread element (91) one by one to complete a finished product of the bead string.

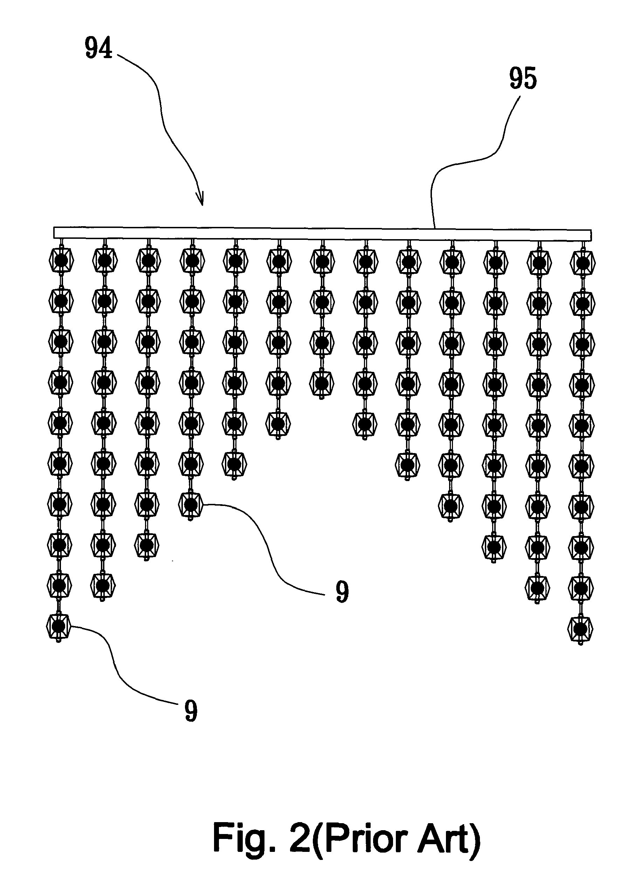

The bead string (9) is applied to make a door curtain, window curtain, wrist chain, necklace or similar ornament. As illustrated in Fig. 2, the bead string (9) is applied in a door curtain (94). Multiple bead strings (9) are cut into different lengths to form a pattern; and one end of each of those bead strings is fixed to a bar (95) with another end suspended in mid air to present the well designed and attractive door curtain (94).

However, the manufacturing process of the bead string (9) of the prior art consumes lengthy time since it takes to pass the thread element (91) through the bead (92) via the through hole (923) and tie a fast knot all by manual; any human error in the intervals among those beads (92) could affect symmetry and aesthetics of the bead string (9). If any fast knot (93) fails to tightly rest on the bead (92), the bead (92) could slide up or down to fail meeting customer requirements. The presence of the fast knot (93) appears to spoil integrity and aesthetics of the bead string (9).

### SUMMARY OF THE INVENTION

The primary purpose of the present invention is to provide a bead string comprised of a thread element covered up with multiple layers of plastic material. Versatile changes in appearance and color are achieved to upgrade appreciation interest and artistic value of the bead string by injecting multiple types of plastic material in different colors or transparencies depending on each of multiple different cavities.

To achieve the purpose, a bead string of the present invention includes a thread element and multiple beads. Wherein, those beads are spaced at intervals and firmly attached to the thread element; each bead contains one or a plurality of a first layer; different types of plastic material are respectively injected into a first cavity and a second cavity to mold the inner layer and the first outer layer; one or a plurality of thread element passes through the first cavity; the inner layer tightly covers up the thread element; the second cavity accommodates one or a plurality of thread element and the inner layer; and the first outer layer tightly covers up the inner layer.

### BRIEF DESCRIPTION OF THE DRAWINGS

Fig. 1 is a schematic view showing a bead string of the prior art.
Fig. 2 is a schematic view showing the prior art is applied in a door curtain.
Fig. 3 is a schematic view showing a construction of a preferred embodiment of the present invention.
Fig. 4 is a schematic view showing the first preferred embodiment is applied in a door curtain.
Fig. 5 is a schematic view of another preferred embodiment of the present invention.
Fig. 6 is a schematic view of another preferred embodiment yet of the present invention.
Fig. 7 is a schematic view of another preferred embodiment yet of the present invention.

### DETAILED DESCRIPTION OF THE PREFERRED EMBODIMENTS

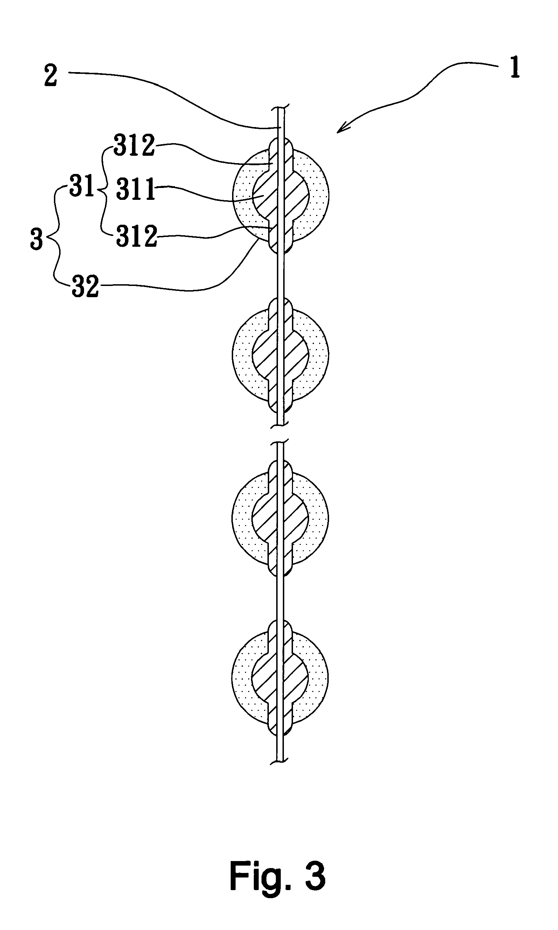

Referring to Fig. 3 for a preferred embodiment of the present invention, a bead string (1) is essentially comprised of a thread element (2) and multiple beads (3). The thread element (2) may be made of woven, non-woven, metal, plastic or any other equivalent material, and a cotton yarn is preferred; those beads (3) are spaced at intervals and firmly attached to the thread element (2); each bead (3) contains one or a plurality of inner layer (31) and one or a plurality of first outer layer (32).

The inner layer (31) is molded by injecting a plastic material into a first cavity where the thread element (2) passes through (not illustrated); and the molded inner layer (31) when cooled down to tightly cover up the thread element (2); in the preferred embodiment, the inner layer (31) is comprised of a bulb (311) and two pillars (312) respectively extending from an upper end and a lower end of the bulb (311); and the bead (3) is prevented from easily moving or falling off by tight combination between the inner layer (31) and the thread element (2).

The first outer layer (32) is molded by injecting a plastic material that is different from the plastic material used in the mold injection of the inner layer (31) into a second cavity (not illustrated); the second cavity accommodates one or a plurality of thread element (2) and the inner layer (31); the first outer layer tightly covers up the inner layer (31); and in the preferred embodiment, the first outer layer (32) indicates a spherical form that tightly covers up the entire bulb and a certain portion of those pillars (312).

Accordingly, those multiple beads (3) attached to the thread element (2) are arranged at an equal interval, irregular changes, and allowing indefinitely repeated manufacturing through different designs of an injection mold without being affected by manual process thus to assure of consistent finished products and minimize occurrence of defective product; furthermore, it is not necessary to tie a fast knot in fixing each bead (3) to the thread element thus to significantly upgrade applications and artistic nature of the bead string (1).

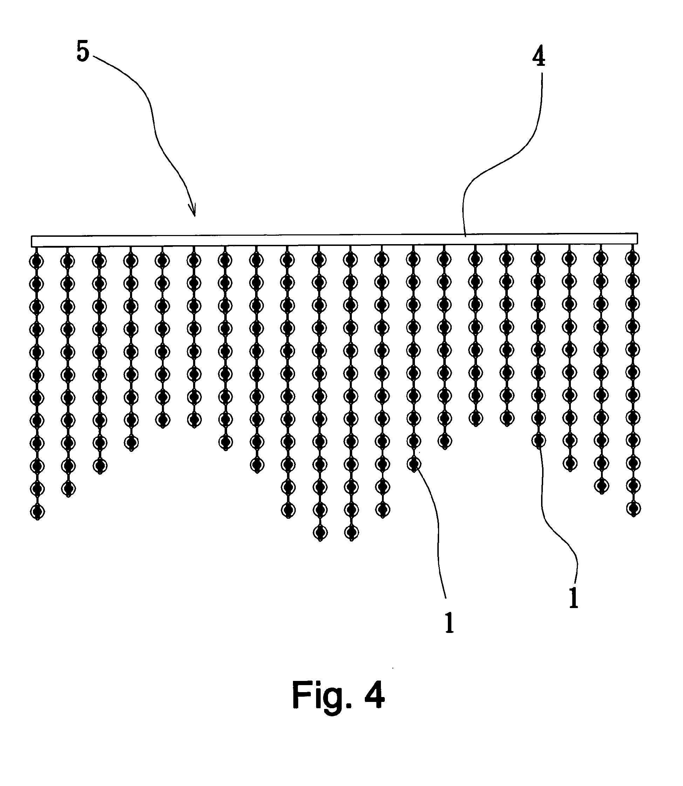

As illustrated in Fig. 4, multiple bead strings (1) of the present invention are cut into a neat pattern with one end of each bead string (1) fixed to a bar (4) to form a door curtain (5). In addition to being applied in making the door curtain (5), the present invention may be also applied in structures including window curtain, wrist chain, necklace, and similar ornaments to cover a wild application range either at home, school, office or personal decoration item.

The first outer layer (32) of the bead may be further covered up one or a plurality layer of plastic material (not illustrated). Alternatively, the bead (3) may be placed in a larger mold to be injected with a plastic material to provide more layers of different types of plastic material for the first outer layer (32) to add changes to the bead either in color, shape or size.

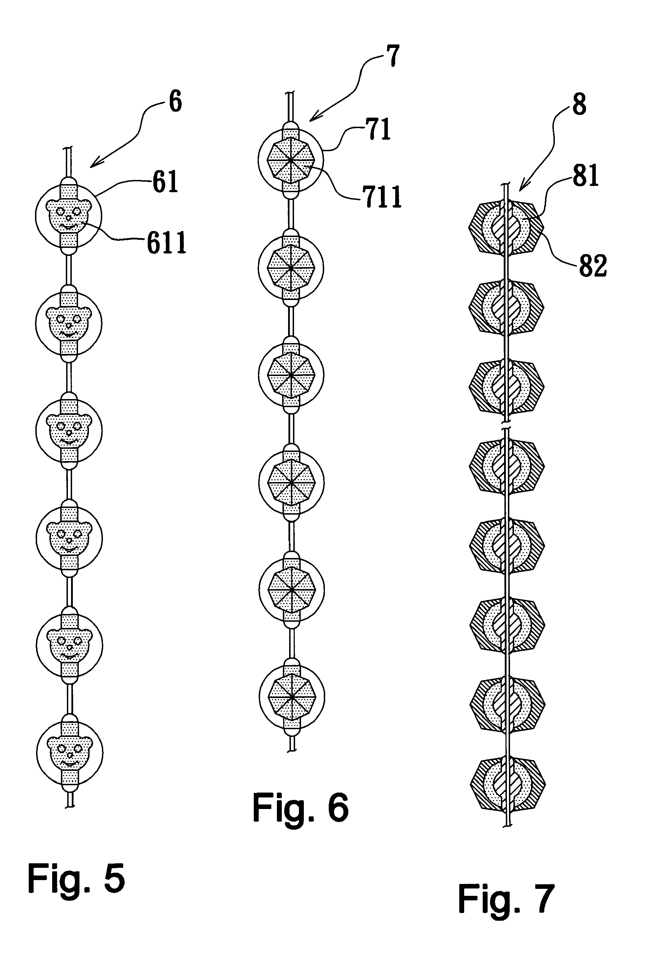

Now referring to Figs. 5, 6, and 7 for three preferred embodiments yet of the present invention, a bead string (6) as illustrated in Fig. 5 provides a changed formative pattern of an animal, e.g., a cute bear on an inner layer (511) of a bead (51). A bead string (7) as illustrated in Fig. 6 provides a changed formative patter of a solid geometric form, e.g., an octagonal ball on an inner layer (711) of a bead (71). A bid string (8) as illustrated in Fig. 7 has a second outer layer (82) provided further to a first outer layer (81) of a bead string (8); a shape of the second outer layer may be totally different from that of the first outer layer (81). For example, the first outer layer (81) is related to a ball and the second outer layer is related to a polygonal ball so to increase perspective sense, sense of gradation, and rich color presentation.

It is to be noted that the preferred embodiments disclosed in the specification and the accompanying drawings are not limiting the present invention; and that any construction, installation, or characteristics that is same or similar to that of the present invention should fall within the scope of the purposes and claims of the present invention.

## Claims

1. A bead string (1, 6, 7, 8) comprising a thread element (2) and multiple beads (3, 61, 71) spaced at intervals and firmly attached to the thread element (2); **characterized in that** each bead (3, 61, 71) containing one or a plurality of inner layer (31, 611, 711) and one or a plurality of a first outer layer (32, 81); both of the inner layer (31, 611, 711) and the first outer layer (32, 81) of the bead (3, 61, 71) being molded by respectively injecting plastic into a first cavity; one or a plurality of thread element (2) passing through the first cavity; the second cavity accommodating the thread element (2) and the inner layer (31, 611, 711) of bead (3, 61, 71); and the first outer layer (32, 81) tightly covering up the inner layer (31, 611, 711).

2. The bead string (1, 6, 7, 8) as claimed in claim 1, wherein the inner layer (31, 611, 711) contains a bulb (311) and tow pillars (312) respectively extending from an upper end and a lower end of the bulb (311); and the first outer layer (32, 81) indicates a spherical form tightly covering up the bulb (311) and a certain portion of those pillars (312) of the inner layer (31, 611, 711).

3. The bead string (1, 6, 7, 8) as claimed in claim 1, wherein the first outer layer (32, 81) is further covered with one or a plurality of layer (82) of plastic material.

4. The bead string (1, 6, 7, 8) as claimed in claim 1, wherein the inner layer (31,611,711) relates to a formation of an animal.

5. The bead string (1, 6, 7, 8) as claimed in claim 1, wherein the inner layer (31, 611, 711) relates to a solid geometric form.
